# EUROPEAN PATENT APPLICATION

(11) **EP 2 540 392 A1**
(43) Date of publication of application: **02.01.2013**
(21) Application number: 10846322.5
(22) Date of filing: 31.03.2010
(51) Int. Cl.: B01J 23/85, C07B 31/00

(54) **HYDRO REFINING CATALYST**

(30) Priority: 25.02.2010 CN 201010114256
(71) Applicant: Petrochina Company Limited, Dongcheng District, Beijing 100007 (CN)
(72) Inventor: LIANG, Shunqin, Gansu 730060 (CN); WU, Jie, Gansu 730060 (CN); LV, Longgang, Gansu 730060 (CN); QIN, Peng, Gansu 730060 (CN); KANG, Hongmin, Gansu 730060 (CN); CHANG, Xiaoxin, Gansu 730060 (CN); QIAN, Ying, Gansu 730060 (CN); SUN, Limin, Gansu 730060 (CN); WANG, Zongbao, Gansu 730060 (CN); CHEN, Genping, Gansu 730060 (CN); JIANG, Cailan, Gansu 730060 (CN); ZHENG, Yundi, Gansu 730060 (CN); MA, Haowen, Gansu 730060 (CN)
(74) Representative: Sonn & Partner Patentanwälte
(86) International application number: PCT/CN2010/000417
(87) International publication number: WO 2011/103698

(57) **Abstract**

Disclosed is a hydrorefining catalyst produced by placing a carrier into a steeping liquor for steeping, then aging, drying and activating. The catalyst contains the carrier, Mo and Co, characterized in that, based on 100 wt% of the catalyst, the catalyst contains 5-25% of molybdenum oxide, 1-6% of cobalt oxide, 0-15% of tungsten oxide, 0-4% of nickel oxide and 0-4.5% of alkali metal oxides, the pore volume of the catalyst is 0.30-0.85ml/g, and the specific surface area is 110-380m²/g. A compounded solvent for producing the catalyst contains simultaneously ammonia and polyamine complexing agent. The catalyst has good hydrogenation activity, high selectivity, long running time and excellent antiscorching characteristics.

## Description

### Technical Field of the Invention

The present invention relates to a hydrorefining catalyst, which is useful in hydrorefining of medium-low distillate oils.

### Background Art of the Invention

Currently, there were many reports about hydrorefining catalysts with Ni-Mo, Co-Mo, Ni-W, Co-W, Co-Mo-Ni, and W-Mo-Ni as active components, and preparation method thereof. In the process of preparing the catalysts containing cobalt and molybdenum by using steeping method, a main problem that exists is that the active components Co and Mo are difficult to be dissolved, and especially two active components are difficult to be dissolved in one solvent. Further, in preparation of the catalysts by using a multi-step steeping method, the preparation cost of the catalysts is increased. In preparation of the catalysts by using a one-step steeping method, problems that exist in the prior art are as follows: an organic acid/base needs to be used to promote dissolution of the active components; when the contents of the active components are required to be high, a large amount of organic acid/base needs to be used; in calcination, the temperature is difficult to be controlled, and temperature runaway easily occurs, a large amount of gas is discharged, and loss of catalyst is serious.

Further, whether the formulated steeping liquor of active components is clear and homogeneous directly influences the dispersion degree of the active components in the catalyst after steeping, thereby influencing the catalyst activity and selectivity. Therefore, selection of effective solvent and dissolution method is a key factor for formulation of the steeping liquor.

US4409131 discloses a method for preparing a CoMo/NiMo catalyst by steeping a carrier in a solution containing active components and aqueous ammonia in one step. A process for formulating the steeping liquor is introduced in detail, in which it is required to heat a mixture to promote dissolution of the active components.

US6013598 discloses a selective hydrodesulfurized catalyst and a preparation method thereof. The catalyst includes cobalt, molybdenum as active components and aluminum oxide as a carrier, and is prepared by isometric steeping the carrier in an aqueous solution of the active components with citric acid added, and the maximum content of molybdenum oxide in the resulting catalyst is merely 10 wt%.

CN91110935.8 discloses a method for preparing a hydrorefining catalyst, which includes dissolving cobalt acetate in water, adding ethylene diamine to form a mixed solution of ethylenediamine cobalt, adding ammonium molybdate to the solution at pH 12 to 14, to prepare a co-steeping liquor containing cobalt and molybdenum metals, and steeping a porous carrier in the co-steeping liquor, to prepare the catalyst. This method has the disadvantage that calcination needs to be carried out under oxygen-free or trace oxygen atmosphere, to obtain the catalyst product.

CN94114194.2 discloses a catalyst with zinc oxide modified γ-aluminum oxide as a carrier and with cobalt and molybdenum as active components, and a method for preparing the catalyst. The method includes: to a certain amount of aqueous ammonia with a concentration of 15% to28%, adding a desired amount of a cobalt salt, and adding a certain amount of ethylenediamine with continuous stirring, till the amount of ethylenediamine was 1/50 to 1/7 based on the weight of the cobalt salt; and then adding a desired amount of ammonium molybdate with continuous stirring, to prepare a Co-Mo co-steeping liquor; steeping the preparative carrier in the co-steeping liquor in one step for 1 to 10 hours, dried for 2 to 6 hours at 110 to 150°C, calcinating for 3 to 8 hours at 480 to 600°C, to prepare the catalyst, which preferably includes 1 wt% to 5 wt% CoO, 8 wt% to 14 wt% MoO, 1 wt% to 15 wt% ZnO and the remaining being γ-Al₂O3.

CN00130284.1 discloses a hydrorefining catalyst and method for preparing the same. The catalyst is prepared by steeping an aluminum oxide carrier with a high polymer and a Group IVB metal added, in a co-steeping liquor of ammonia containing molybdenum, cobalt, and nickel as active components. No detailed description of the process for formulating the steeping liquor is provided. The resulting catalyst includes 1 wt% to 9 wt% CoO, 8 wt% to 25 wt% MoO, 7 wt% to 22 wt% IVB and the remaining being Al₂O₃.

Currently, it is a well-known technology to use aqueous ammonia as a solvent to dissolve Co and Mo active components; however, the effect of aqueous ammonia to increase the dispersion degree of active components is not significant. It still was a challenge how to formulate a clear and stable steeping liquor containing active components with a low surface tension and low viscosity in a simple way, where the requirement of one-step isometric steeping of multiple components needs to be met, and after steeping, the active components needs to keep a high dispersion state. For direct dissolution of cobalt salt in water or aqueous ammonia without heating, if the amount of solvent is controlled, the cobalt salt cannot be completely dissolved, so an additional organic acid or base needs to be added to accelerate dissolution of cobalt; if dissolution of cobalt salt in water or aqueous ammonia with heating, energy consumption in the process of preparation of the catalyst is increased, although salt of the active components can be completely dissolved under the condition that the amount of solvent is controlled.

Because pyrolysis gasoline after two-stage hydrogenation is generally used as the raw material for aromatics extraction, the catalyst is not only required to have an excellent hydrogenation activity (bromine number in product of lower than 1.0 g Br₂/100 g) and desulfurization activity (sulfur in product of lower than 1.0 µg/g), is also required to have a favorable selectivity for hydrogenation (avoiding loss of aromatic hydrogenation) and a favorable long-term running performance. The catalysts for pyrolysis gasoline two-stage hydrogenation in current industrial units generally have a good hydrogenation activity and desulfurization activity, but suffered from insufficient long-term running capability, high loss of aromatic hydrogenation (higher than 2%), low high-load running capability, high production cost of catalyst, which influence the economic benefit of the unit.

The above problems are caused by the following main reasons:
(1) Due to poor dispersion of the active metal components on the catalyst, existence of over-potent active center sites, the loss of aromatic hydrogenation, especially loss of benzene hydrogenation, is high;
(2) Since a certain amount of B-acid centers exist on the catalyst, while strong L-acid centers of L-acids are more, the catalyst is easily scorched at a high temperature, so that bed pressure drop is increased, thereby circulation of hydrogen is influenced, hydrogen compressor cannot work, and unqualified hydrogenated products is produced, resulting in shutdown and reproduction;
(3) The specific surface and pore volume, especially the pore size distribution of the catalyst has great influence on the catalyst activity, so a suitable specific surface area, pore volume and pore size centralized in distribution are very important for mass transfer, heat transfer and diffusion;
(4) In order to improve the catalyst activity, the content of the active components may be increased, but resulting in poor dispersion. In view of this problem, multi-step steeping may be used in the preparation process of the catalyst, that is, after one-step steeping, drying and calcination are performed, and then next steeping is performed. As a result, the preparation process is complex, and waste of energy is serious, resulting in increased production cost of the catalyst.

Although one-step steeping in which a complexing agent such as organic acids, ammonia, or ethylenediamine is added during the formulation of the steeping liquor is reported, addition of macromolecular organic acid or base in a large amount may make the subsequent calcination more difficult; due to the high volatility of ammonia, addition of ammonia may make the formulation of the steeping liquor more difficult; and moreover, the dispersion degree of the active components is not significantly increased.

### Summary of the Invention

The present invention is directed to a catalyst prepared by a simple and energy saving method. In the prepared catalyst, strong acid and B-acid are weakened, the dispersion degree of active components is significantly increased. In hydrodesulfurization and hydrodenitrogenation, use of the catalyst can reduce benzene hydrogenation and scorching rate. The activity, selectivity and stability of the catalyst are high.

The hydrorefining catalyst according to the present invention is produced by placing a carrier into a steeping liquor for steeping, then aging, drying and activating, the said catalyst contains the carrier, Mo and Co, characterized in that, based on 100 wt% of the catalyst, the catalyst contains 5-25% of molybdenum oxide, 1-6% of cobalt oxide, 0-15% of tungsten oxide, 0-4% of nickel oxide and 0-4.5% of alkali metal oxides, the pore volume of the catalyst is 0.30-0.85ml/g, and the specific surface area is 110-380m²/g, and in preparation of the steeping liquor, a salt of active component cobalt is added into a compounded solvent comprising aqueous ammonia and polyamine complexing agent.

More specifically, the most preferable catalyst prepared by the present invention is obtained by first mixing aqueous ammonia with polyamine complexing agent to prepare the compounded solvent; adding the salt of the active component cobalt to the compounded solvent and dissolving and then adding a molybdenum salt, or a molybdenum salt and salts of other active components or adjuvants and dissolving, to prepare the steeping liquor; steeping the carrier, aging, drying and activating.

The carrier in the catalyst of the present invention is not specially limited, and a carrier for common supported hydrorefining catalysts, especially a carrier for cobalt or molybdenum supported hydrorefining catalysts, for example, a high-temperature resistant inorganic oxide such as aluminum oxide, silicon oxide, and aluminum oxide-silicon oxide, may be used. The carrier may be modified, with aluminum oxide carrier being preferred.

The present invention provides a method for preparing the catalyst by one-step steeping by using a basic steeping liquor formulated by a compounded solvent.

When the compounded solvent formulated by adding polyamine complexing agent to aqueous ammonia is used to dissolve a molybdenum and cobalt salt, the cobalt salt is preferably first dissolved, because cobalt directly complexed with the compounded solvent to form a cobalt coordinated complex without firstly being dissolved in aqueous ammonia and then forming a complex with the complexing agent, thereby promoting dissolution of the active components in the catalyst, .

In this method, in formulation of the steeping liquor, a nickel salt, a tungsten salt and/or a soluble alkali or carbonate compound of a Group IA element also may be added as needed. Generally, the pH value is preferably adjusted to be higher than 10. In this way, the formulated steeping liquor is clear and stable, and has a low surface tension and low viscosity.

The steeping liquor is formulated at 20 to 30°C without heating. The present invention is particularly useful in preparation of the catalyst containing multiple high-content active components, especially containing high-content cobalt and molybdenum, and in particular, by a method for preparing the catalyst by using one-step isometric steeping to load the active components onto the carrier, so that the active components are highly dispersed on the catalyst, B-acid centers on the catalyst are effectively removed and strong L-acid centers are weakened. The isometric steeping described in the present invention refers to that the amount of the steeping liquor is 70% to 130% of the pore volume of the catalyst carrier.

In the present invention, polyamine complexing reagent may be one or more of EDTA, triethylene tetramine, triethanolamine and ethylenediamine, with ethylenediamine being preferred. The amount of polyamine complexing agent may vary with the amount of cobalt, which is not particularly limited in the present invention, and is preferably 5% to 10% (by volume) of the steeping liquor, because if the amount is too high, a large amount of organics may be decomposed in the process of calcination, and if the amount is too low, the effect of promoting dissolution of the active components and increasing the dispersion degree of the active components cannot be achieved. In formulation of the steeping liquor, the concentration of aqueous ammonia is not particularly limited in the present invention, provided that the active components can be completely dissolved according to the amount of the active components, so that the active components and polyamine complexing reagent are complexed to form stable complexes. Generally, after the active components are completely dissolved, a certain amount of aqueous ammonia may be added, to make the amount of the steeping liquor to satisfy requirements for isometric steeping. After the catalyst is treated by thermal activation, some ammonia molecules are still adsorbed on strong L-acid sites, so that the acidity of the catalyst is weakened, the hydrogenation selectivity and stability of the catalyst are improved, and especially the scorching rate of catalyst in the reaction is decreased. The carriers are steeped by the method according to the present invention, aged and dried and activated, to obtain the catalyst. No toxic gas is produced in the process of thermal activation of the catalyst, thus achieving one-step "green" preparation. Aging, drying and activation all adopt the conditions in the prior art, which are not particularly limited in the present invention, and the activation temperature is preferably 350 to 600°C.

In the present invention, the solvent used for dissolving the active components is aqueous ammonia with polyamine complexing agent added. By using the compounded solvent, on the one hand, the solubility of the active components in aqueous ammonia is increased, and the amount of aqueous ammonia is reduced; on the other hand, the dispersion degree of the active components on the catalyst is significantly increased due to the addition of polyamine complexing agent.

The steeping liquor used in the present invention is a basic steeping liquor, which is formulated by adjusting the pH value of the steeping liquor to be higher than 10, and preferably to be 10 to 12, after the active components are dissolved. The steeping liquor thus formulated is clear, stable, and has a low viscosity and good dispersion of active metals.

In the present invention, preferably, the active component molybdenum is added in the form of ammonium molybdate, and the active component cobalt is added in the form of cobalt sulfate, cobalt halide, cobalt nitrate or cobalt acetate, preferably cobalt nitrate or/and cobalt acetate, because cobalt nitrate and cobalt acetate have high solubility, which is beneficial to distribution of the active components on the carrier. As the alkali metal adjuvants, soluble alkalis of lithium, sodium, potassium, rubidium and cesium may be selected, and soluble carbonates of lithium, sodium, potassium, rubidium and cesium may also be selected. In the present invention, potassium adjuvants are preferred, and hydroxides are preferred, because due to addition of a hydroxide, the basicity of the steeping liquor is enhanced, so that the metal active components are complexed with polyamine complexing agent, thereby increasing the stability of the steeping liquor. At the same time, due to the addition of the alkali metal adjuvants the acidity of the catalyst is adjusted, and the antiscorching characteristics of the catalyst is enhanced.

In the present invention, the temperature conditions for preparation of the catalyst are not limited, preferably below 20°C to 40°C, and the shaped aluminum oxide carriers are steeped in the foregoing steeping liquor in one step, dried for 4 to 5 hours at 80°C to 120°C, and calcinated for 3 to 8 hours at 350°C to 600°C, to obtain the catalyst.

### BRIEF DESCRIPTION OF THE DRAWINGS

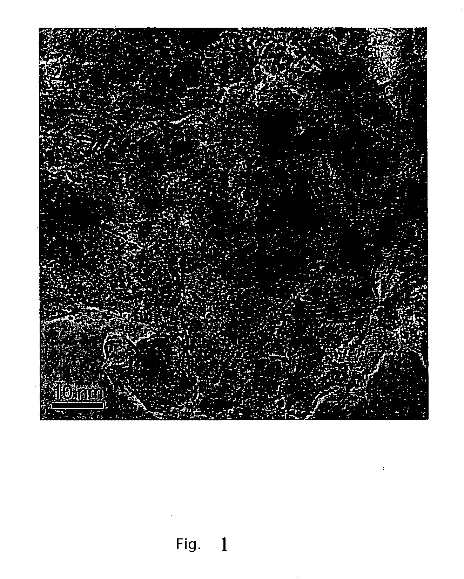

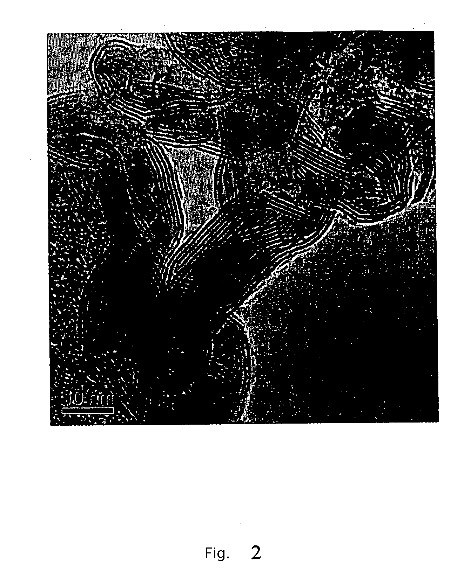

The accompanying drawings are comparison diagrams of the dispersion degrees of the active components of catalysts A and E in the detailed description. FIG. 1 is a transmission electron microscope image of the catalyst A according to the present invention, and FIG. 2 is a transmission electron microscope image of the control catalyst E, in which black thread corresponds to a lamella of the active components, the length of the stripe is the length of the lamella, and the number of stacked stripes represents the number of lamellae. To statistically analyze dispersion and stacking of MoS₂ lamella on the carrier surface with TEM images of the catalyst, various regions on the catalyst surface are viewed and many electron microscope images were taken, and among which, FIG. 1 and FIG. 2 are the representative transmission electron microscope images. It can be seen from FIG. 1 and FIG. 2 that, the lamellae of the active components on the catalyst A have uniform length and are evenly distributed; and the lamellae of the active components on the catalyst B have different length, and are unevenly distributed.

### DETAILED DESCRIPTION

The sources and main parameters in physical properties of main raw materials used for preparation of the catalyst are as follows:
γ-Al₂O₃: supplied by Zibo Wanlin Chemical Technologies Co. Ltd., with a pore volume of 0.90 to 0.95 ml/g and a specific surface area of 300 to 320 m²/g;
Modified γ-Al₂O₃: supplied by Zibo Wanlin Chemical Technologies Co. Ltd., with a content of silicon oxide of 3.5%, a pore volume of 0.90 to 0.95 ml/g and a specific surface area of 300 to 320 m²/g;
α-Al₂O₃: supplied by Zibo Wanlin Chemical Technologies Co. Ltd., with a pore volume of 0.85 to 0.90 ml/g and a specific surface area of 280 to 300 m²/g;
Aqueous ammonia: supplied by Baiyin Liangyou Chemical Reagent Co. Ltd., with a concentration of 25 wt% to 30 wt%

Analytical methods and criteria:
Determination method of content of metal in the catalyst: The contents of metals in the catalyst are determined by using atomic absorption spectroscopy;
Bromine number: SH/T 0630-1996 bromine number, bromine index determination method for petroleum products (coulometric method);
Diolefin: UOP326-07 maleic anhydride method;
Carbon deposit in catalyst (%): The carbon element in the catalyst is determined by using an elementary analyzer;
Nitrogen content: SH/T 0657, ASTM D4629 determination method of trace nitrogen in liquid petroleum hydrocarbons;
Sulfur content: SH/T 0253-92 determination method of total sulfur in light petroleum product (coulometric method);
Feedstock for hydrogenation: supplied by Lanzhou Petroleum & Chemical Company, with properties of petroleum products shown in Table 1.

**Table 1 Indicators of feedstock oils for hydrogenation**

| Petroleum products | Color | Bromine number x 10⁻² (g/g) | Diolefin x 10⁻² (g/g) | Distillation range (°C) | Density (g/ml) | Nitrogen content (µg/g) | Sulfur content (µg/g) |
|---|---|---|---|---|---|---|---|
| Pyrolysis gasoline | Faint yellow | 75 | 2.5 | 45-180 | 0.825 | / | 80-100 |
| Diesel oil | Brown | / | / | 60-190 | 0.940 | 250-300 | 800-1000 |

### Example 1

At 30°C, to a mixed solution of 60 ml of aqueous ammonia and 5 ml of ethylenediamine, 14.21 g of cobalt acetate was added and stirred for dissolution, then 31.97 g of ammonium molybdate and 9.32 g of nickel nitrate were added and stirred for dissolution, followed by addition of 3.49 g of potassium hydroxide and addition of aqueous ammonia to adjust the volume of the solution to 80 ml. 100 g of γ-Al₂O₃ carrier was steeped in the solution, aged for 12 hours, dried for 4 hours at 120°C and calcinated for 4 hours at 580°C, to obtain a catalyst A.

### Example 2

At 25°C, to a mixed solution of 50 ml of aqueous ammonia and 7 ml of ethylenediamine, 28.01 g of cobalt acetate was added and stirred for dissolution, then 14.21 g of ammonium molybdate and 18.8 g of ammonium metatungstate were added and stirred for dissolution, followed by addition of 2.38 g of lithium hydroxide and addition of aqueous ammonia to adjust the volume of the solution to 100 ml. 100 g of α-Al₂O₃ carrier was steeped in the solution, aged for 12 hours, dried for 5 hours at 100°C and calcinated for 5 hours at 350°C, to obtain a catalyst B.

### Example 3

At 20°C, to a mixed solution of 55 ml of aqueous ammonia and 6 ml of EDTA, 7.1 g of cobalt nitrate was added and stirred for dissolution, then 42.67 g of ammonium molybdate, 7.8 g of nickel acetate and 6.60 g of strontium nitrate were added for dissolution, followed by addition of 6.84 g of lithium carbonate and addition of aqueous ammonia to adjust the volume of the solution to 110 ml. 100 g of modified γ-Al₂O₃ carrier was steeped in the solution, aged for 12 hours, dried for 4 hours at 200°C, and calcinated for 3.5 hours at 400°C, to obtain a catalyst C.

### Example 4

To 300 g of modified γ-Al₂O₃ powder, 8.4 ml of phosphoric acid and 140 ml of water were added, blended and extruded into a strip, dried in the air at 120°C and calcinated for 6 hours at 560°C, to obtain modified γ-Al₂O₃ carrier containing phosphorus.

At 25°C, to a mixed solution of 50 ml of aqueous ammonia and 9 ml of triethylene tetramine, 28.01 g of cobalt acetate was added and stirred for dissolution, then 14.21 g of ammonium molybdate and 18.8 g of ammonium metatungstate were added and stirred for dissolution, followed by addition of aqueous ammonia to adjust the volume of the solution to 95 ml. 100 g of modified γ-Al₂O₃ carrier containing phosphorus was steeped in the solution, aged for 12 hours, dried for 5 hours at 100°C and calcinated for 5 hours at 350°C, to obtain a catalyst D.

### Comparative Example 1

At 30°C, to 60 ml of aqueous ammonia, 14.21 g of cobalt acetate was added and stirred until most of cobalt acetate was dissolved, then 5 ml of ethylenediamine was added and stirred until cobalt acetate was completely dissolved, then 31.97 g of ammonium molybdate and 9.32 g of nickel nitrate were added and stirred for dissolution, followed by addition of 3.49 g of potassium hydroxide and addition of aqueous ammonia to adjust the volume of the solution to 80 ml. 100 g of γ-Al₂O₃ carrier was steeped in the solution, aged for 12 hours, dried for 4 hours at 120°C and calcinated for 4 hours at 580°C, to obtain a catalyst E.

Comparison in dispersion degree of the active components between the catalysts A and E was shown in FIG. 1 and FIG. 2.

### Comparative Example 2

At 25°C, to a mixed solution of 20 ml of ethylenediamine and 80 ml of water, 28.01 g of cobalt acetate was added and stirred for dissolution, then 14.21 g of ammonium molybdate and 18.8 g of ammonium metatungstate were added and stirred for dissolution, followed by addition of 2.38 g of lithium hydroxide, and 100 g of α-Al₂O₃ carrier was steeped in the solution, aged for 12 hours, dried for 5 hours at 100°C and calcinated for 5 hours at 350°C, to obtain a catalyst F.

### Comparative Example 3

At 20°C, to 110 ml of aqueous ammonia, 7.1 g of cobalt nitrate was added and stirred for dissolution, and 100g of modified γ-Al₂O₃ carrier was steeped in the solution, aged for 12 hours, dried for 4 hours at 200°C and calcinated for 3.5 hours at 400°C. To 110 ml of aqueous ammonia, 42.67 g of ammonium molybdate, 7.8 g of nickel acetate and 6.60 g of strontium nitrate were added and stirred for dissolution, followed by addition of 6.84 g of lithium carbonate. 100 g of modified γ-Al₂O₃ carrier was steeped in the solution, aged for 12 hours, dried for 4 hours at 200°C, and calcinated for 3.5 hours at 400°C, to obtain a catalyst G.

The results of comparison in acidity between catalyst B and catalyst D were shown in Table 2.

**Table 2 Results of comparison in acidity between catalyst B and catalyst D**

| Catalyst | Weak acid (µmol/g) | | Strong acid (µmol/g) | |
|---|---|---|---|---|
| | L-acid | B-acid | L-acid | B-acid |
| Catalyst B | 230.29 | 6.52 | 62.55 | 0 |
| Catalyst D | 216.40 | 16.60 | 98.13 | 0 |

### Example 5

200-hour evaluation of the catalysts A and E prepared as above was performed respectively on a 100 ml adiabatic bed hydrogenation unit, with the pyrolysis gasoline one-stage hydrogenation products as feedstock (properties of the feedstock as shown in Table 1). Samples were taken per 6 hours to analyze the iodine number and the sulfur content of the product. The mean data for 200-hour evaluation of the catalysts was shown in table 4.

The presulphurization conditions for catalyst were as follows: adding carbon disulfide to cyclohexane to formulate a sulfurized oil (sulfur content: 1000 µg/g); charging hydrogen gas at a pressure of 2.8 MPa; when the temperature of a catalyst bed was raised to 240°C, feeding the sulfurized oil, continuously heating to 325°C and maintaining at 325°C for 30 hours, and then cooling to 240°C to end the sulfurization.

The evaluation conditions: reaction pressure of 2.6 MPa, inlet temperature of 240°C, volumetric space velocity of 3.0 h⁻¹ for fresh feedstock oils, and hydrogen to oil volume ratio of 300:1 based on fresh oils.

### Example 6

1000-hour evaluation of the catalysts B, D and F was performed with the feedstock for evaluation, the presulphurization conditions for catalyst, the evaluation conditions and the feedstock the same as those in Example 4. The mean data of iodine number and sulfur content of the products for catalyst evaluation was shown in Table 5.

### Example 7

1000-hour hydrogenation evaluation of the catalysts C and G prepared as above was performed respectively, on a 100 ml adiabatic bed hydrogenation unit, with the diesel oil as feedstock (properties of the feedstock as shown in Table 1). Samples were taken per 6 hours to analyze the nitrogen and the sulfur content of the product. The mean data for 1000-hour evaluation of the catalysts was shown in table 6.

### Industrial applicability

The presulphurization conditions for catalyst were as follows: adding carbon disulfide to cyclohexane to formulate a sulfurized oil (sulfur content: 1000 µg/g); charging hydrogen gas at a pressure of 2.8 MPa; when the temperature of a catalyst bed was raised to 240°C, feeding the sulfurized oil, continuously heating to 325°C and maintaining at 325°C for 30 hours, then cooling to 240°C to end the sulfurization.

The evaluation conditions: reaction pressure of 2.8 MPa, inlet temperature of 280°C, volumetric space velocity of 3.0 h⁻¹ for fresh feedstock oils, and hydrogen to oil volume ratio of 300:1 based on fresh oils.

It can be seen from the evaluation results in Table 4 that, in the catalysts provided by the present invention, the active components are highly dispersed, thus achieving good activity and selectivity for hydrogenation.

It can be seen from the evaluation results in Table 5 that, in the catalysts provided by the present invention, the catalyst acidity is improved, thus achieving good carbon deposit resistance and good stability for hydrogenation.

It can be seen from the evaluation results in Table 6 that, in the catalysts provided by the present invention, the activities for hydrodesulfurization and hydrodenitrogenation are high.

When being used in hydrodesulfurization, the catalyst prepared by the method according to the present invention hydrogenates saturated mono-olefins to a maximum extent, and can specifically meet requirements of petroleum products with variable contents of sulfur and diolefin and operation in high space velocity. The catalyst has a good hydrogenation activity, a high selectivity, a long running time and an excellent antiscorching characteristics.

**Table 3 Compositions of catalysts A-E**

| Catalyst No. | Example 1 | Example 2 | Example 3 | Example 4 | Comparative Example 1 | Comparative Example 2 | Comparative Example 3 |
|---|---|---|---|---|---|---|---|
| | A | B | C | D | E | F | G |
| Molybdenum oxide, % | 18 | 8 | 24 | 8 | 18 | 8 | 24 |
| Cobalt oxide, % | 3.0 | 5.9 | 1.5 | 5.9 | 3.0 | 5.9 | 1.5 |
| Nickel oxide, % | 1.8 | 0 | 1.5 | 0 | 1.8 | 0 | 1.5 |
| Tungsten oxide, % | 0 | 10.0 | 0 | 10.0 | 0 | 10.0 | 0 |
| Potassium oxide, % | 2.2 | 0 | 0 | 0 | 2.2 | 0 | 0 |
| Lithium oxide, % | 0 | 1.5 | 1.5 | 0 | 0 | 1.5 | 1.5 |

**Table 4 Mean data for 1000-hour evaluation of catalysts A, E**

| Catalyst No. | Example 1 | Comparative Example 1 |
|---|---|---|
| | A | E |
| Bromine number of hydrogenated products x 10⁻² (g/g) | 0.20 | 1.55 |
| Sulfur content of hydrogenated products, µg/g | 0.2 | 2.1 |
| Loss of benzene hydrogenation, % | 0.6 | 4.1 |

**Table 5 Mean data for 1000-hour evaluation of catalysts B, D and F**

| Catalyst No. | Example 2 | Example 4 | Comparative Example 2 |
|---|---|---|---|
| | B | D | F |
| Bromine number of hydrogenated products x10⁻² (g/g) | 0.83 | 1.0 | 2.4 |
| Sulfur content of | 0.90 | 1.0 | 2.7 |
| hydrogenated products, µg/g | | | |
| Carbon deposit on catalyst after 500-hour operation, % | 3% | 5% | 10% |
| Pressure difference in reactor after 500-hour operation of catalyst, MPa | Not obvious | Up to 0.10 | Up to 0.25 |

**Table 6 Mean data for 1000-hour evaluation of catalysts C and G**

| Catalyst No. | Example 3 | Comparative Example 3 |
|---|---|---|
| | C | G |
| Nitrogen content of hydrogenated products, µg/g | 55 | 157 |
| Sulfur content of hydrogenated products, µg/g | 227 | 430 |

## Claims

1. A hydrorefining catalyst produced by placing a carrier into a steeping liquor for steeping, then aging, drying and activating, the said catalyst contains the carrier, Mo and Co, **characterized in that**, based on 100 wt% of the catalyst, the catalyst contains 5-25% of molybdenum oxide, 1-6% of cobalt oxide, 0-15% of tungsten oxide, 0-4% of nickel oxide and 0-4.5% of alkali metal oxides, the pore volume of the catalyst is 0.30-0.85ml/g, and the specific surface area is 110-380m²/g, and in preparation of the steeping liquor, a salt of active component cobalt is added into a compounded solvent comprising aqueous ammonia and polyamine complexing agent.

2. The hydrorefining catalyst according to claim 1, **characterized in that**, the catalyst is prepared by adding the salt of active component cobalt into the compounded solvent and dissolving, and then adding a molybdenum salt, or a molybdenum salt and salts of other active components or adjuvants and dissolving, to prepare the steeping liquor; and steeping the carrier, and aging, drying and activating.

3. The hydrorefining catalyst according to claim 1, **characterized in that**, the carrier is a high-temperature resistant inorganic oxide.

4. The hydrorefining catalyst according to claim 3, **characterized in that**, the carrier is aluminum oxide, silicon oxide, aluminum oxide-silicon oxide, or modified forms thereof.

5. The hydrorefining catalyst according to claim 1, **characterized in that**, a nickel salt, a tungsten salt and/or a soluble alkali or carbonate compound of a Group IA element is added during the formulation process of the steeping liquor.

6. The hydrorefining catalyst according to claim 1, **characterized in that**, the steeping liquor has a pH value of higher than 10.

7. The hydrorefining catalyst according to claim 1, **characterized in that**, the polyamine complexing agent is one or more of EDTA, triethylene tetramine, triethanolamine and ethylene diamine.

8. The hydrorefining catalyst according to claim 1, **characterized in that**, the polyamine complexing agent is added at an amount of 5% to 10% by volume of the steeping liquor.

9. The hydrorefining catalyst according to claim 2, **characterized in that**, the cobalt salt is cobalt sulfate, cobalt halide, cobalt nitrate or cobalt acetate.

10. The hydrorefining catalyst according to claim 1 or 2, **characterized in that**, the catalyst is prepared by steeping the carrier and aging, drying for 4 to 5 hours at 80°C to 120°C, and calcinating for 3 to 8 hours at 350°C to 600°C.
